# EUROPEAN PATENT SPECIFICATION

(11) **EP 3 608 997 B1**
(45) Date of publication and mention of the grant of the patent: **11.11.2026**
(21) Application number: 19190625.4
(22) Date of filing: 07.08.2019
(51) Int. Cl.: H01M 10/04, H01M 10/42, H01M 10/654, H01M 50/536, H01M 50/51, H01M 50/128, H01M 50/117, H01M 50/591

(54) **HORIZONTAL COMPOSITE ELECTRICITY SUPPLY STRUCTURE**
HORIZONTALE ZUSAMMENGESETZTE STROMVERSORGUNGSSTRUKTUR
STRUCTURE D'ALIMENTATION ÉLECTRIQUE COMPOSITE HORIZONTALE

(30) Priority: 08.08.2018 TW 107127703; 11.10.2018 TW 107135860
(43) Date of publication of application: 12.02.2020
(73) Proprietor: Prologium Technology Co., Ltd., Taoyuan City 320 (TW); Prologium Holding Inc., Grand Cayman KY1-1104 (KY)
(72) Inventor: YANG, SZU-NAN, 320 Taoyuan City (TW)
(74) Representative: Cabinet Chaillot

(56) References cited:
- WO-A1-2017/089454
- JP-A- 2011 071 044
- US-A1- 2010 227 208

## Description

### FIELD OF THE DISCLOSURE

The present disclosure relates generally to an electricity supply structure, and particularly to a high-voltage, high-capacity, and three-dimensionalized horizontal composite electricity supply structure by serially connecting electrochemical system elements and concurrently connecting parallelly and/or serially electrochemical system element groups in the electricity supply structure.

### BACKGROUND OF THE DISCLOSURE

In recent years, due to the exhaustion of petrochemical fuels and the prevalence of the consciousness of environmental protection, people are forced to rethink how to balance between living convenience and environmental protection for those objects using petrochemical fuels as the power source and exhausting massive greenhouse gases. Cars, as important transportation vehicles, become one of the primary objects to be inspected. Accordingly, under the global trend of energy saving and carbon reduction, many countries worldwide set car electrification as an important target for carbon dioxide reduction. Unfortunately, electric cars face many problems in practical applications. For example, the capacity of electricity supply elements limits the endurance. Consequently, more batteries should be connected in series or parallelly for increasing the capacity and thus extending the mileage.

To reduce the car weight for extending mileage, the secondary batteries with high energy density and light weight, such as lithium-ion secondary batteries, become the best choice for the battery of electric cars. Nonetheless, how to assemble multiple lithium-ion secondary batteries to form a safe and stable power source has become an urgent challenge for people.

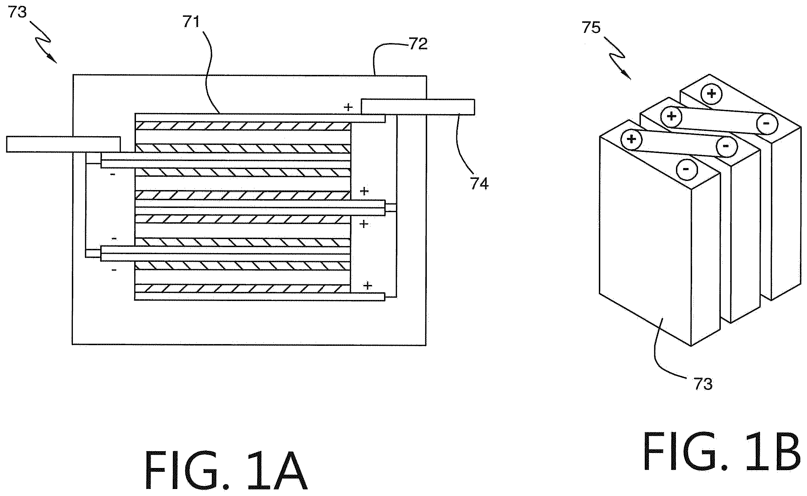

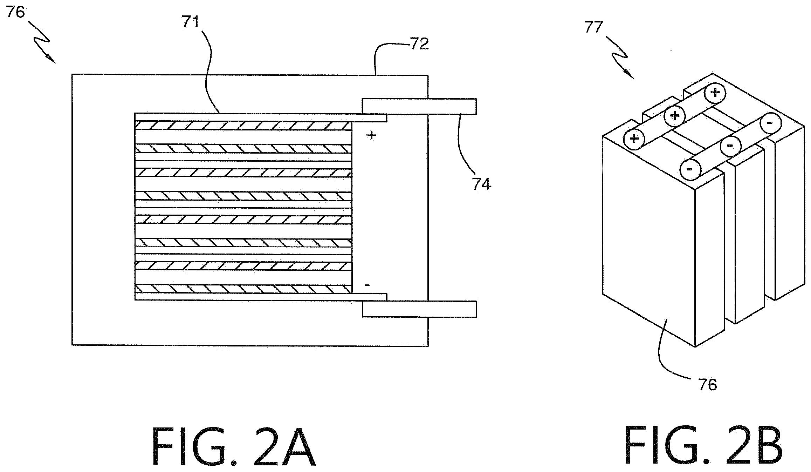

First, please refer to FIG. 1A and FIG. 1B, showing the common method. After multiple sets of battery elements 71 are connected parallelly, the housing 72 is used for sealing and forming the battery cell 73. Then the conductive leads 74 protruding from the housings 72 of the battery cells 73 are connected in series externally for reaching a sufficient voltage, giving the battery module 75 for cars. According to another method, a single housing 72 is adopted for covering multiple battery elements 71, as shown in FIG. 2A and FIG. 2B. In other words, internal series connection is adopted for increasing the voltage of the battery cell 76. Then multiple battery cells 76 are connected parallelly and externally for reaching sufficient capacity for forming the battery module 77 for cars. Unfortunately, current electrolyte can only sustain around 5 volts. Besides, it is difficult to form a closed system for electrolyte due to internal structural problems. Once the voltage exceeds the sustainable range of the electrolyte, the electrolyte will decompose and make the battery module 77 fail. Even worse, the battery might explode. Accordingly, there is no such product in the market.

According to the US patent application No. 2004/0091771, adjacent battery modules share a common electricity collecting layer. By using this method, the problem of electrolyte decomposition as described above can be solved. Unfortunately, owing to the series connection to the common electricity collecting layer, the design will be less flexible. Only internal series connection can be adopted. To form a battery module, external parallel connection of a plurality of battery cells still should be adopted.

Furthermore, according to a composite battery cells of Taiwan patent application No. 106136071, series and parallel connections can be done inside battery cells directly for giving high-voltage and high-unit-capacity battery cells, eliminating the drawbacks of lower performance and reduced capacity density due to external connection according to the prior art. Unfortunately, according to the technology, the electricity supply element group achieves high capacity and high voltage by vertically stacking a great number of electricity supply elements for series and/or parallel connections.

Nonetheless, while facing puncture of metal objects, the high voltage drop caused by puncture is unavoidable extremely dangerous for fully solid, pseudo solid (solid/liquid), or liquid electrolyte systems. It is particularly dangerous for battery cells formed by vertically stacking massive electricity supply elements internally.

According to the drawbacks, the present disclosure provides a novel horizontal composite electricity supply structure for avoiding safety concerns caused by puncture of battery elements by metal objects.

Patent application publication US 2010/0227208 Al discloses a battery cell structure having the features of the preamble of claim 1. Further battery cell structures are known from patent application publications WO 2017/089454 A1 and JP 2011 071044 A.

### SUMMARY

An objective of the present disclosure is to provide a horizontal composite electricity supply structure, which adopts series and/or parallel connections in the horizontal direction to connect electrically multiple electrochemical system element groups for reducing the number of vertically stacked electrochemical system elements and avoiding safety problems caused by punching by metal objects.

Another objective of the present disclosure is to provide a horizontal composite electricity supply structure. A first insulation layer and a second insulation are disposed at the top and bottom, respectively. Multiple electrochemical system element groups extending horizontally and connected serially and/or parallelly are disposed between the first and second insulation layers. By using the first and second insulation layers, the potential damages caused by punctures on battery cells by external metal objects can be prevented.

Another objective of the present disclosure is to provide a horizontal composite electricity supply structure. There is no electrochemical reaction between adjacent electrochemical system elements except charge transfer. Thereby, electricity supply elements will not limit to the maximum voltage of allowance of electrolyte, and could connect in series and/or parallel way. Hence, the capacity density and voltage can be improved.

Still another objective of the present disclosure is to provide a horizontal composite electricity supply structure. Multiple channels are formed between adjacent electrochemical system element groups, acting as paths for heat dissipation.

A further objective of the present disclosure is to provide a horizontal composite electricity supply structure. The electricity collecting layers between adjacent electrochemical system elements are shared for connection. The contact area is much larger than the one by nickel plate soldering according to the prior art. Thereby, the internal resistance of the electrochemical system element group can be reduced substantially. The performance of the power module formed by the electrochemical system element groups hardly loses. In addition, because the reduction of resistance, the charging and discharging speeds increase significantly, and the heating problem is reduced significantly. Then the cooling system of the electrochemical system element group can be simplified and can be managed and controlled easily. Thereby, the reliability and safety of the overall composite electricity supply structure can be enhanced.

To achieve the above objectives, the present disclosure provides a horizontal composite electricity supply structure having the features of claim 1. Further embodiments are subject-matter of the dependent claims.

The horizontal composite electricity supply structure according to the invention comprises a first insulation layer, a second insulation layer, two patterned conductive layers, and a plurality of electrochemical system element groups. The second insulation layer is disposed opposing to the first insulation layer. The two patterned conductive layers are disposed on the surface of the first and second insulation layers, respectively, and faced to each other. The plurality of electrochemical system element groups are disposed between the first insulation layer and the second insulation layer, and connected serially and/or parallelly via the patterned conductive layers. Each electrochemical system element group is formed by one or more electrochemical system elements. A package layer is deposited on the periphery of each electrochemical system element, so that there is no circulation between adjacent electrolyte system elements except charge transfer. Thereby, electricity supply elements will not be limited to the maximum voltage of allowance of electrolyte, and could connect in series and/or parallel at same time. Each electrochemical system element comprises an isolation layer, two active material layers, and an electrolyte system. The two active material layers are disposed on both sides of the isolation layer, respectively. The electrolyte system is disposed in the active material layers. The electrochemical system elements on the two outermost sides of each electrochemical system element group adopt the patterned conductive layers as the electricity collecting layers.

In the following, concrete embodiment are described in detail for understanding the objective, technologies, feature, and the effects provided by the present disclosure.

### BRIEF DESCRIPTION OF THE DRAWINGS

FIG. 1A and FIG. 1B show schematic diagrams of the battery cell and battery module according the first embodiment according to the prior art;
FIG. 2A and FIG. 2B show schematic diagrams of the battery cell and battery module according the second embodiment according to the prior art;
FIG. 3 shows a schematic diagram of the horizontal composite electricity supply structure according to the first embodiment of the present disclosure;
FIG. 4A shows a structural schematic diagram of the electrochemical system element and the package layer according to the present disclosure;
FIG. 4B shows another structural schematic diagram of the electrochemical system element and the package layer according to the present disclosure;
FIG. 5A shows a schematic diagram of the embodiment of FIG. 3 in which the electrochemical system element group of the horizontal composite electricity supply structure is formed by serially connecting multiple electrochemical system elements;
FIG. 5B shows a partially enlarged diagram of the region A in FIG. 5A;
FIG. 6 shows a schematic diagram of internally and parallelly connecting electrochemical system element groups of the horizontal composite electricity supply structure according to an embodiment of the present disclosure;
FIG. 7 shows a schematic diagram of the horizontal composite electricity supply structure according to another embodiment of the present disclosure;
FIG. 8A shows a schematic diagram of externally and serially connecting multiple horizontal composite electricity supply structures according to an embodiment of the present disclosure;
FIG. 8B shows a schematic diagram of externally and parallelly connecting multiple horizontal composite electricity supply structures according to an embodiment of the present disclosure;
FIG. 9 shows a schematic diagram of the horizontal composite electricity supply structure according to another embodiment of the present disclosure;
FIG. 10 shows a schematic diagram of the horizontal composite electricity supply structure according to another embodiment of the present disclosure;
FIG. 11 shows a schematic diagram of the horizontal composite electricity supply structure according to another embodiment of the present disclosure;
FIG. 12 to FIG. 14 show series and/or parallel electrical connection diagrams of multiple electrochemical system elements in an electrochemical system element group according to the present disclosure; and
FIG. 15 shows a schematic diagram of a tab formed on the common electricity collecting layer of the electrochemical system element according to the present disclosure.

### DETAILED DESCRIPTION

Given the safety problem caused by puncture on multiple electrochemical system elements stacked vertically and connected serially by metal sharp objects for the demand of high voltage and high capacity, the present disclosure provides a novel horizontal composite electricity supply structure to solve the puncture problem.

The present disclosure mainly discloses a horizontal composite electricity supply structure, which comprises a plurality of electrochemical system element groups. The electrochemical system element group comprises one or more mutually serially and/or parallelly connected electrochemical system elements. Then, after multiple electrochemical system element groups are mutually connected serially and/or parallelly via the patterned conductive layers, a first conductive terminal and a second conductive terminal are connected to electrochemical system element groups to form the composite electricity supply structure. In other words, inside the composite electricity supply structure, series and parallel connections can be done concurrently. The electrochemical system elements forming the electrochemical system element group according to the present disclosure don't share electrolyte systems each other. Figures are used for further description. The above composite electricity supply structure can be any supply element capable of storing energy and supply external devices, such as batteries or capacitors.

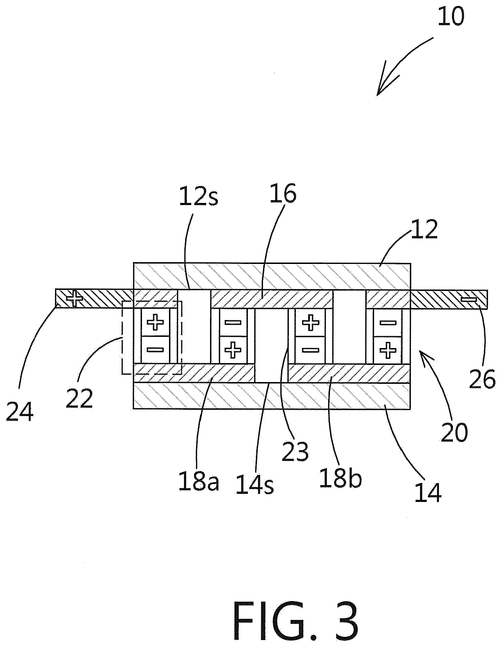

First, please refer to FIG. 3, which shows a schematic diagram of the horizontal composite electricity supply structure according to the first embodiment of the present disclosure. As shown in the figure, the horizontal composite electricity supply structure 10 according to the present disclosure mainly comprises a first insulation layer 12, a second insulation layer 14, a patterned conductive layer 16 (16a, 16b 16c), another patterned conductive layer 18 (18a, 18b), and a plurality of electrochemical system element groups 20. The second insulation layer 14 is opposing to the first insulation layer 12 in the horizontal direction. The patterned conductive layer 16 is located on a first surface 12s extending horizontally inside the first insulation layer 12. The patterned conductive layer 18 is located on a second surface 14s extending horizontally inside the second insulation layer 14. The patterned conductive layer 16 is opposing to the patterned conductive layer 18. The material of the first and second patterned conductive layers 16, 18 can be selected from the group consisting of metals and any conductive materials. The plurality of electrochemical system element groups 20 are sandwiched between the first and second insulation layers 12, 14 and connected electrically to the different polarity via the patterned conductive layers 16, 18 for forming series connection. For convenience, a battery is adopted in the following embodiment for description. A person having ordinary skill in the art knows well that the embodiment is not used to limit the scope of the present disclosure.

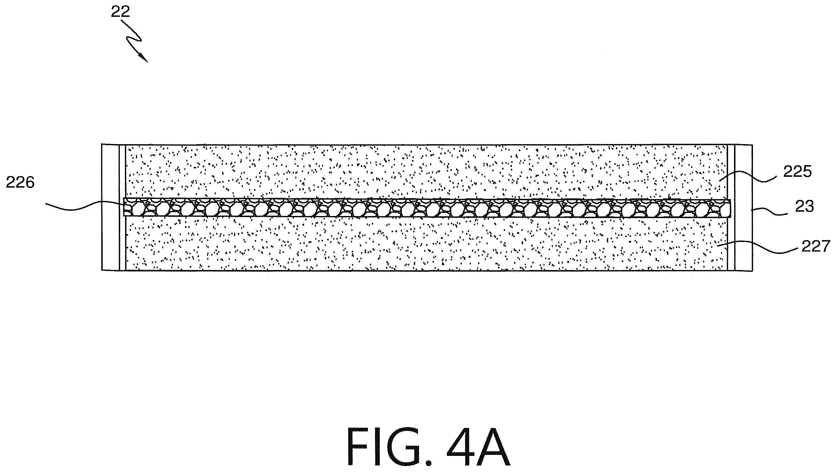

The electrochemical system element group 20 as described above is formed by one or more electrochemical system elements 22. For example, in FIG. 3, the horizontal composite electricity supply structure 10 is formed by serially connecting four electrochemical system element groups 20 with each one of the electrochemical system element groups 20 formed by an electrochemical system element 22. The structure of the above electrochemical system element 22 is shown in FIG. 4A. Each electrochemical system element 22 includes a first active material layer 225, an isolation layer 226, a second active material layer 227, and an electrolyte system disposed in the first active material layer 225 and the second active material layer 227. The first active material layer 225 is connected to the electricity collecting layer 16, and the second active material layer 227 is connected to the other electricity collecting layer 18. The isolation layer 226 is located between the first active material layer 225 and the second active material layer 227. A package layer 23 is disposed on the periphery of each electrochemical system element 22 so that the electrolyte system of adjacent electrochemical system elements do not circulate except charge transfer. Without electrochemical reaction, electrochemical system elements will not limit to the maximum voltage of allowance of electrolyte, could connect in series and/or parallel at same time.

The material of the isolation layer 226 with micro holes allowing ions to passing through can be selected from the group consisting of polymer materials, ceramic materials, and glass fiber materials. The micro holes can be penetrating holes, nonlinear holes, or even made by porous materials. **In** addition, porous ceramic insulative materials can be distributed inside the micro hole of the substrate. The ceramic insulative materials can be formed by materials such as micrometer- or nanometer-grade titanium dioxide (TiO₂), aluminum oxide (Al₂O₃), silicon dioxide (SiO₂), or alkylated ceramic particles. The ceramic insulative materials can further include polymer adhesives, such as polyvinylidene fluoride (PVDF), polyvinylidene fluoride-co-hexafluoropropylene (PVDF-HFP), polytetrafluoroethylene (PTFE), acrylic acid glue, epoxy, polyethylene oxide (PEO), polyacrylonitrile (PAN), or polyimide (PI).

The electrolyte system is disposed in the first and second active material layers 225, 227. The form of the electrolyte system can be selected from the group consisting of liquid state, pseudo solid state, gel state, solid state or combinations thereof. The active materials of the active material layers 225, 227 can convert chemical energy to electrical energy for usage (supplying electricity) or electrical energy to chemical energy for storage (charging), and can achieve ion conduction and transport concurrently. The generated electrons can be led outward via the adjacent electricity collecting layers.

The material of the package layer 23 can include epoxy, polyethylene, polypropylene, polyurethane, thermoplastic polyimide, silicone, acrylic resin, or ultraviolet-hardened glue. The package layer 23 is disposed on the periphery of the electrochemical system element 22 with two ends glued to the electricity collecting layers on both sides of the electrochemical system element 22. According to the present embodiment, the package layer 23 is glues to the patterned conductive layers 16, 18 for sealing the electrolyte system between the patterned conductive layers 16, 18 and the package layer 23 for avoiding leakage and circulation with the electrolyte system of other electrochemical system elements 22. Thereby, the electrochemical system element 22 is an independent and complete electricity supply module.

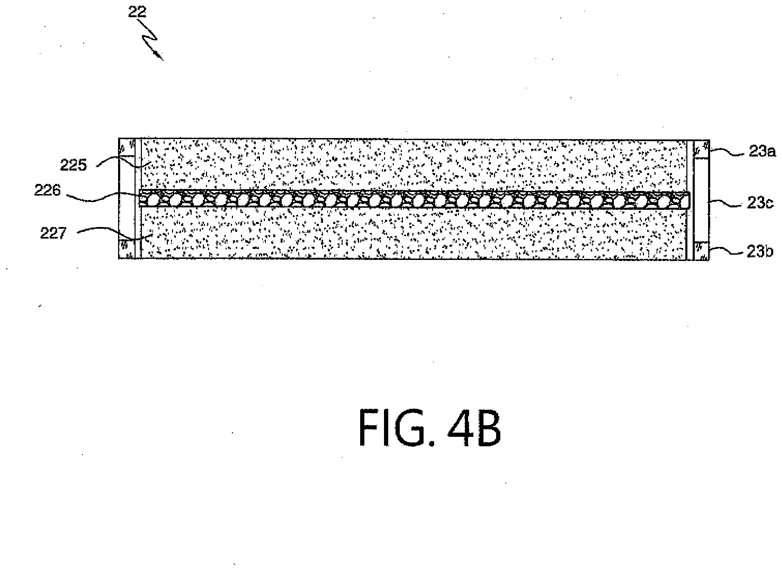

To improve the sealing effect of the package layer 23, the package layer 23 can be designed to have three layers. Please refer to FIG. 4B. The top and bottom layers 23a, 23b are modified silicone and the middle layer is a silicone layer 23c. The modified silicone layers 23a, 23b on both sides are modified by adjusting the ratio of addition and condensation silicone for gluing heterogeneous materials. By using the design, the cohesion at the interface is increased. At the same time, the overall appearance is more complete and the production yield is improved. Furthermore, the design can block permeation of moisture. Internally, the silicone layer 23c acting as the main structure can block damages caused by polar solvent and plastic agent. Thereby, the overall sealing structure can be more complete.

In addition, for easier description and identification, the electrochemical system elements 22 in the figures for illustrating the horizontal composite electricity supply structure use simple positive and negative symbols to identify the positive and negative electrical polarities for illustrating the electrical properties, instead of plotting the detailed components of the electrochemical system element 22 as shown in FIG. 4A and FIG. 4B. A person having ordinary skill in the art should know the meanings of the positive and negative polarities. Hence, the details will not be described again.

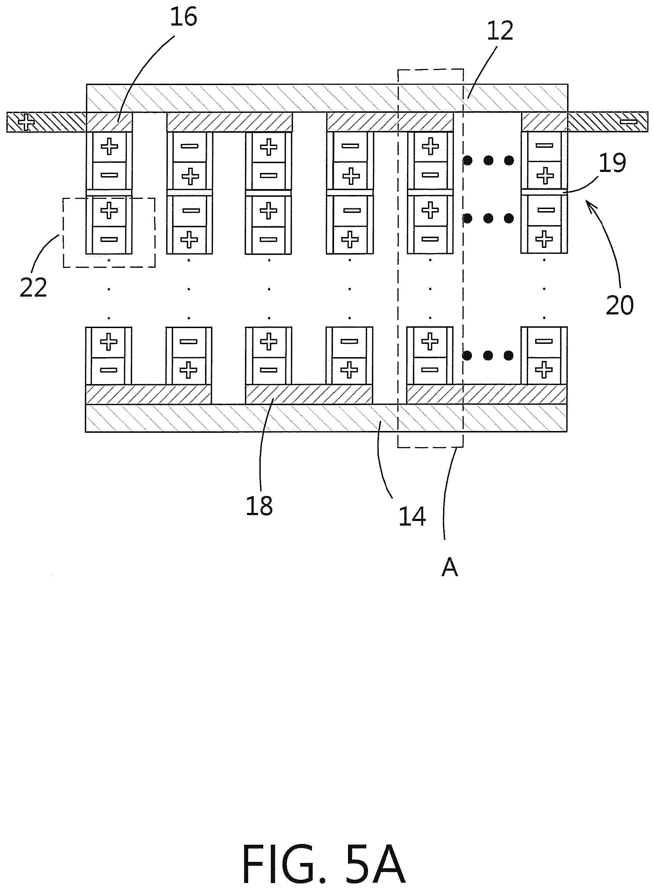

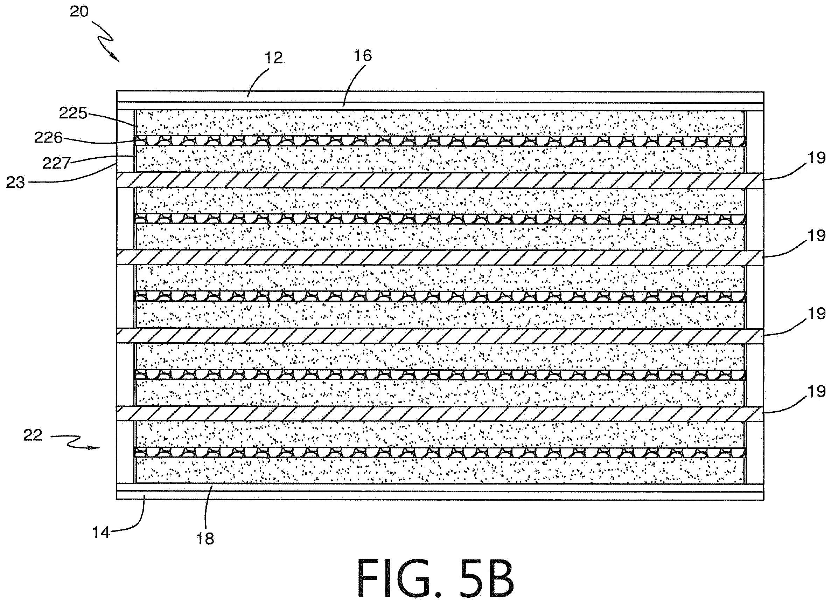

As shown in FIG. 5A and FIG. 5B, a single electrochemical system element group 20 is formed by serially connecting a plurality of vertically stacked electrochemical system elements 22 in opposite polarities. The outer sides of the electrochemical system elements 22 on the outermost sides of the electrochemical system element group 20 use the patterned conductive layers 16, 18 directly as the electricity collecting layers. Two stacked electrochemical system elements 22 use a common electricity collecting layer 19 for isolating and collecting electrons. Thereby, the second active material layers 227 and the first active material layers 225 of adjacent electrochemical system elements 22 are connected electrically through the common electricity collecting layer. For example, as shown in the figures, the first active material layer 225 is the positive layer, and the second active material layer 227 is the negative layer. Then the second active material layer 227 of the topmost electrochemical system element 22 contacts the common electricity collecting layer 19; the first active material layer 225 of the adjacent (bottom) electrochemical system element 22 contacts the common electricity collecting layer 19. By stacking sequentially, the electrochemical system element group 20 in series connection can be formed. Because the electrolyte systems of each electrochemical system element 22 do not circulate, there is no electrochemical reactions between adjacent electrochemical system elements 22 except charge transfer (i.e., ions will not transfer or conduct). Therefore, even multiple electrochemical system elements 22 are connected serially to form a high voltage, the electrolyte system inside individual electrochemical system element 22 will not be influenced. The internal voltage is still maintained at the voltage of a single electrochemical system element 22. Thereby, it will not limit to the maximum voltage (generally, around 5 volts) of the electrolyte system, the electricity supply element group 20 with high voltage could be formed by serial stacking multiple electricity supply elements 22. In addition, the electricity collecting layers between adjacent electrochemical system elements 22 are shared for connection. The contact area is much larger than the one by nickel plate soldering according to the prior art. Thereby, the internal resistance of the electrochemical system element group can be reduced substantially. The performance of the power module formed by the electrochemical system element groups hardly loses. Besides, as the reduction of resistance, the charging and discharging speeds increase significantly, and the heating problem is reduced significantly. Then the cooling system of the electrochemical system element group can be simplified and can be managed and controlled easily. Thereby, the reliability and safety of the overall composite electricity supply structure can be enhanced.

Due to the requirement of contacting positive and negative electrode (active material layers 225,227)concurrently, the materials of the patterned conductive layers 16, 18 and/or the common electricity collecting layer 19 as described above should be able to tolerate high and low voltages and no oxidation reaction should occur. For example, the materials include stainless steel (SUS) or graphite. Furthermore, the materials can be the metal powders selected from the group consisting of aluminum, copper, titanium, nickel, stainless steel, and the alloys thereof. By spraying or calendering the metal powers mixed with adhesive, the patterned conductive layers 16, 18 and/or the common electricity collecting layer 19 can be manufactured.

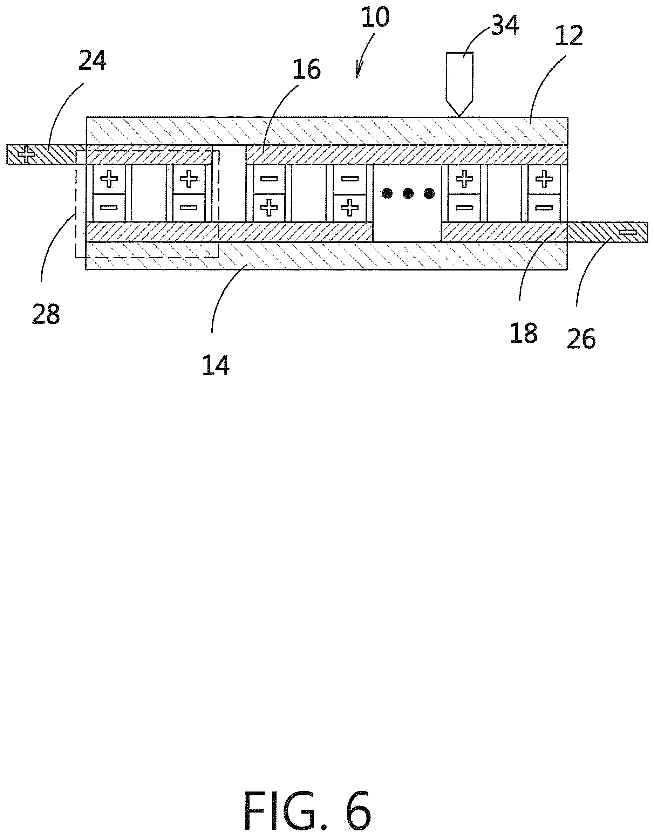

The horizontal composite electricity supply structure 10 according to the present disclosure further comprises a first conductive lead 24 and a second conductive lead 26. In FIG. 3, the first conductive lead 24 and the second conductive lead 26 are connected electrically to the patterned conductive layer 16 concurrently. Of course, they can be connected to different patterned conductive layers. For example, the first conductive lead 24 is connected electrically to the patterned conductive layer 16 and the second conductive lead 26 is connected electrically to the patterned conductive layer 18, as illustrated in FIG. 6.

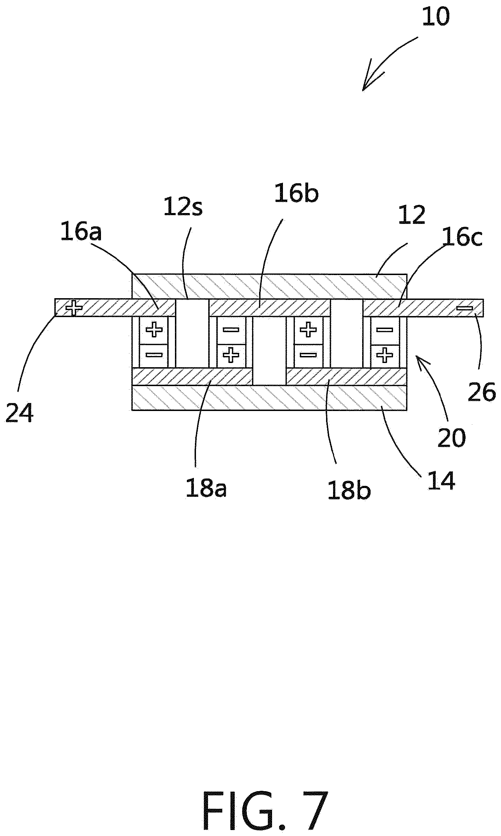

Furthermore, the first conductive lead 24 and the second conductive lead 26 can be formed integrally with the patterned conductive layers 16, 18 connected electrically with them. As shown in FIG. 7, a portion of the patterned conductive layer 16a is extended to the outside of the first insulation layer 12 and acting as the first conductive lead 24; a portion of the patterned conductive layer 16c is extended to the outside of the first insulation layer 12 and acting as the second conductive lead 26. In other words, during the process of patterning, the patterns of the first conductive lead 24 and the second conductive lead 26 are reserved.

When the first and second conductive leads 24, 26 are formed not adopting the integral method, the materials of the first and second conductive leads 24, 26 can be different from those of the patterned conductive layers 16, 18. In addition, direct contact can be formed by soldering with or without soldering material, or by melting method. Alternatively, conductive silver glue or conductive cloth can be adopted.

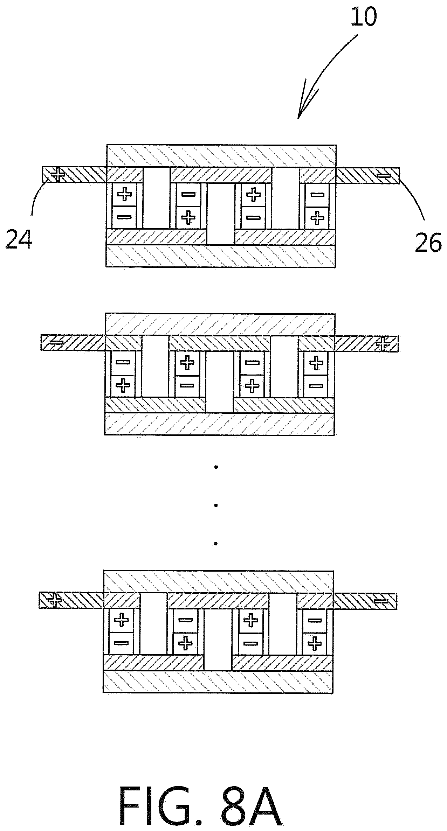

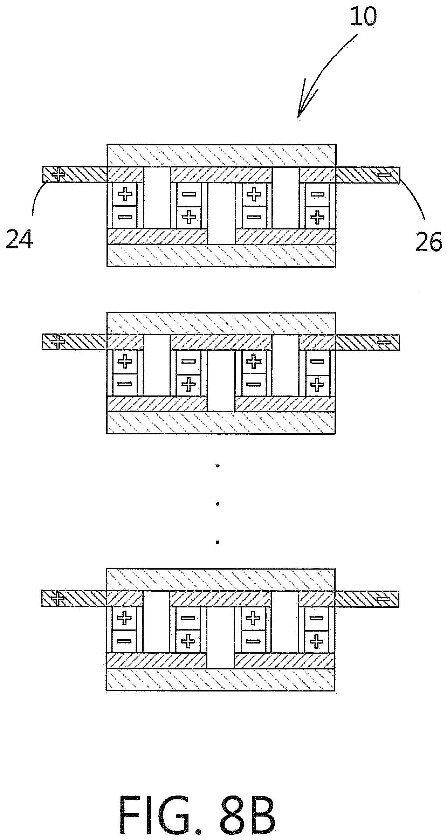

Under the architecture of the horizontal composite electricity supply structure according to the present disclosure, to increase the total capacity or total voltage of the battery module, the only thing to do is to perform external series/parallel connection of multiple horizontal composite electricity supply structures 10 by using the first and second conductive leads 24, 26. Then the total capacity or the total voltage of the battery module can be increased. For example, by externally connecting serially multiple horizontal composite electricity supply structures 10, the total voltage can be increased, as shown in FIG. 8A. By externally connecting parallelly multiple horizontal composite electricity supply structures 10, the total capacity can be increased, as shown in FIG. 8B.

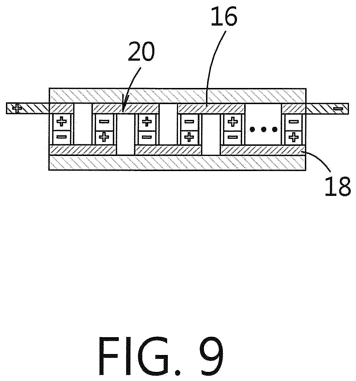

To increase the voltage of a single horizontal composite electricity supply structure, simply add the electrochemical system element group. For example, as shown in FIG. 9, compared to FIG. 3, two electrochemical system element groups 20 are added and connected serially via the patterned conductive layers 16, 18.

Please refer to FIG. 6. This horizontal composite electricity supply structure 10 uses two electrochemical system element groups 20 to form a new set 28 by parallelly connecting the same polarity via the patterned conductive layers 16, 18. Then the new set 28 is used as an element. By connecting the opposite polarities via the first and second patterned conductive layer 16, 18, a series connection is formed. Besides, although the new set 28 can be integrated into an electrochemical system element, the number of gaps 30 can be increased if they are separated.

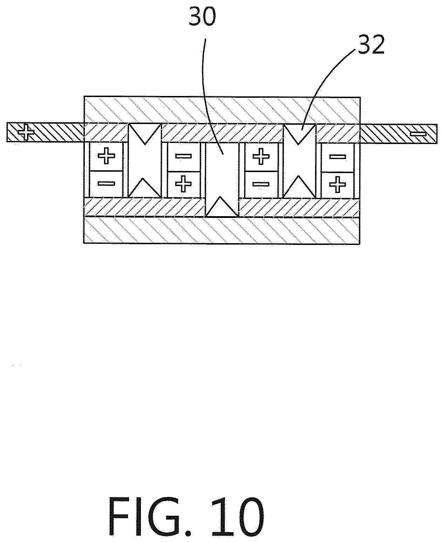

Please refer to FIG. 10. The gaps between connected electrochemical system element groups 20 can act as the heat dissipation channels for the horizontal composite electricity supply structure 10. Multiple positioning members 32 are formed on the surfaces of the first insulation layer 12 and/or the second insulation layer 14 facing the electrochemical system element groups 20. The positioning members 32 are exposed outside the patterned conductive layers 16, 18 for limiting the locations of the electrochemical system element groups 20. For example, the existence of the positioning member 32 can assist to fix the patterned conductive layers 16, 18 to the correct location. Furthermore, a fluid, such as gas or liquid, can be added into the gaps for increasing the heat dissipation effect.

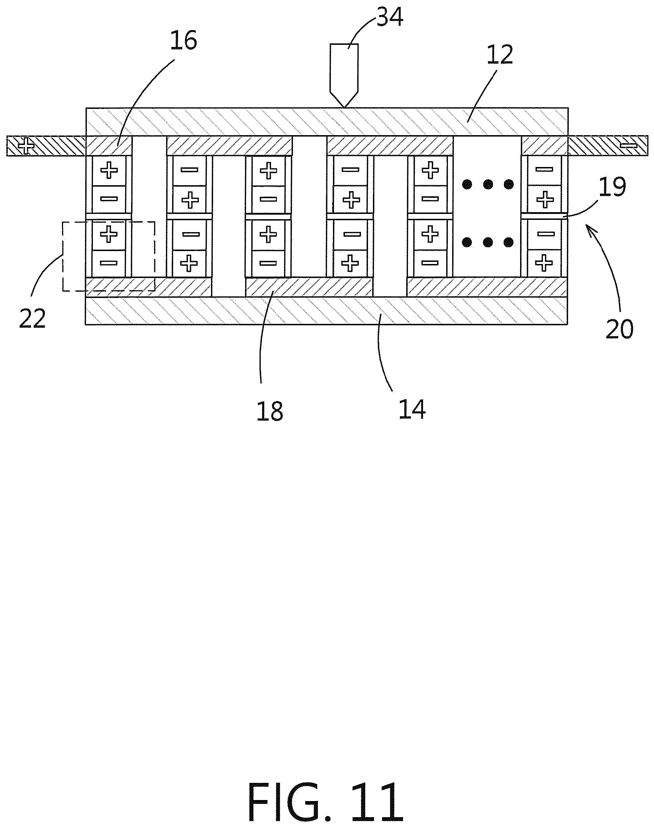

The benefits of the present disclosure will be further described. For example, according to the composite electricity supply structure of the Taiwan patent application No. 106136071, 24 electrochemical system elements are vertically and serially connected to give a voltage value of 24*4.2 volts. By adopting the horizontal composite electricity supply structure according to the present disclosure given the same voltage value and number of electrochemical system elements, 24 single electrochemical system elements can be connected in opposite polarities horizontally via the conductive layers 16, 18, as shown in FIG. 9. Alternatively, 12 pairs of stacked electrochemical system elements can be connected in opposite polarities horizontally via the patterned conductive layers 16, 18, as shown in FIG. 11. Alternatively, another number of stacked electrochemical system elements can be adopted. Under this architecture, when a sharp metal object 34 punctures the horizontal composite electricity supply structure from the outside, instead of the 24 vertically stacked electrochemical system elements, the punctured object will be only a few stacks. Thereby, the danger of puncture on a massive serially stacked electrochemical system elements can be avoided effectively.

Next, when the electrochemical system element group 20 is formed by two or more electrochemical system elements 22, the serial and/or parallel configurations of the plurality of electrochemical system elements 22 are described.

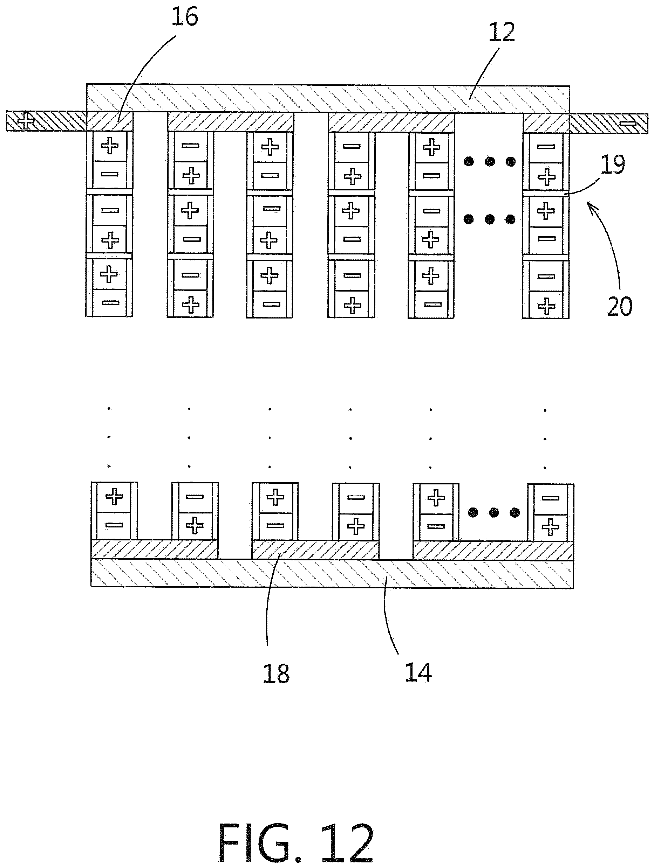

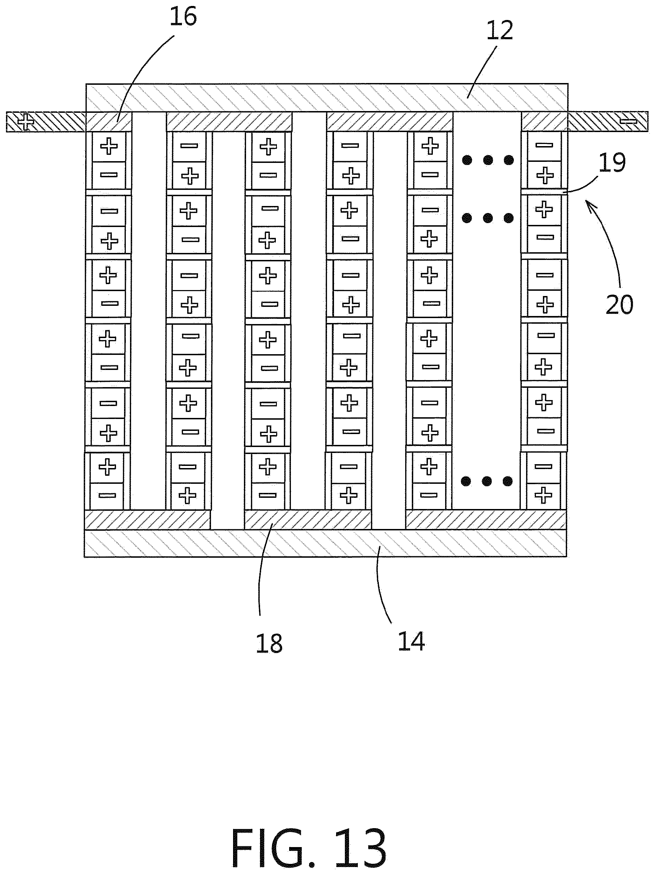

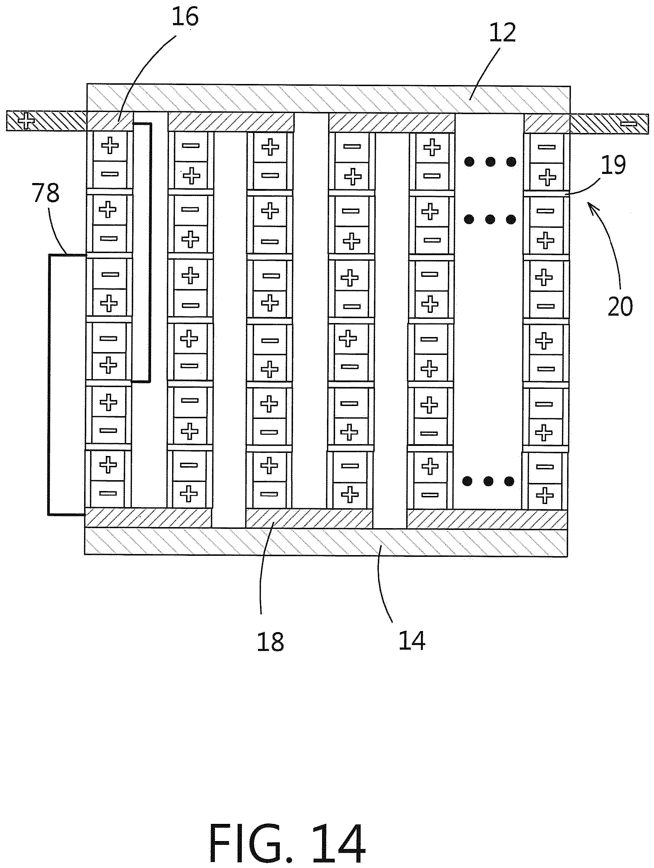

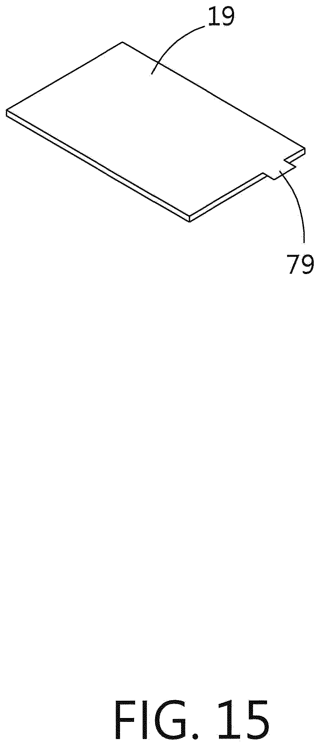

Please refer to FIG.5A. In the figure, multiple electrochemical system elements 22 in the electrochemical system element group 20 are connected electrically in series and opposite polarities. Please refer to FIG.12, multiple electrochemical system elements 22 in the electrochemical system element group 20 are connected electrically in parallel and the same polarity. Please refer to FIG. 13, multiple electrochemical system elements 22 in the electrochemical system element group 20 are connected in a mixed method by first parallel and then series connections. Please refer to FIG. 14, multiple electrochemical system elements 22 in the electrochemical system element group 20 are connected in a mixed method by first series and then parallel connections. In the mixed connection method as described above, suitable wires 78 can be used to connect the positive/negative terminals (the electricity collecting layers) of the electrochemical system element 22 to the corresponding patterned conductive layers. In addition, for convenient connection of the wires 78 and the electricity collecting layers of the electrochemical system elements 22 or the common electricity collecting layer 19, a projective tab 79 can be disposed at the electricity collecting layers, as shown in FIG. 15. The protruding projective tab 79 can be used for electricity connecting.

To sum up, the present disclosure provides a horizontal composite electricity supply structure, which comprises multiple electrochemical system element groups. The electrochemical system element groups are serially and/or parallelly connected internally in a horizontal extension method via the patterned conductive layers for reaching a certain voltage and capacity. In addition, external series and/or parallel connections of multiple horizontal composite electricity supply structures can be done via the first and second conductive leads of the horizontal composite electricity supply structures. Furthermore, the horizontal composite electricity supply structure according to the present disclosure comprises a first and a second insulation layers at the top and bottom for effectively preventing potential damages caused by puncture of metal objects on the electricity supply structure.

Moreover, in addition to blocking puncture effectively, the first and second insulation layers 12, 14 according to the present disclosure can act as the blocking layers for electrical contact between the patterned conductive layers when multiple electricity supply structures 10 are externally connected serially and/or parallelly.

## Claims

1. A horizontal composite electricity supply structure (10), comprising:
a first insulation layer (12);
a second insulation layer (14), disposed opposing to said first insulation layer (12); and
two patterned conductive layers (16, 16a, 16b, 16c, 18, 18a, 18b), disposed on corresponding surfaces of said first insulation layer (12) and said second insulation layer (14);
**characterized by** further comprising:
a plurality of electrochemical system element groups (20), sandwiched between said first insulation layer (12) and said second insulation layer (14), forming series and/or parallel connections internally by being connected with said patterned conductive layers (16, 16a, 16b, 16c, 18, 18a, 18b), each of said plurality of electrochemical system element groups (20) being formed by a plurality of electrochemical system elements (22), said plurality of electrochemical system elements (22) being vertically stacked and adjacent electrochemical system elements (22) sharing a common electricity collecting layer (19);
wherein each of said plurality of electrochemical system elements (22) includes a package layer (23) on a periphery of each of said plurality of electrochemical system elements (22) to separate an electrolyte system thereof and the electrolyte system of each of said plurality of electrochemical system elements (22) does not circulate therebetween, each of said plurality of electrochemical system element groups (20) with adjacent electrochemical system elements (22) having no electrochemical reaction except for charge transferring,
wherein a plurality of positioning members (32) is formed on the corresponding surfaces of said first insulation layer (12) and/or said second insulation layer (14) facing said plurality of electrochemical system element groups (20), and said plurality of positioning members (32) is exposed outside said patterned conductive layers (16, 16a, 16b, 16c, 18, 18a, 18b) for limiting locations of said plurality of electrochemical system element groups (20);
wherein a plurality of heat dissipation channels is disposed between adjacent electrochemical system element groups (20) and outside the package layer (23), and a fluid is added inside said plurality of heat dissipation channels for increasing a heat dissipation effect; and
wherein said plurality of electrochemical system elements (22) on both outermost sides of each of said plurality of electrochemical system element groups (20) uses said patterned conductive layers (16, 16a, 16b, 16c, 18, 18a, 18b) directly as the electricity collecting layers.

2. The horizontal composite electricity supply structure (10) of claim 1, wherein each of said plurality of electrochemical system elements (22) comprises:
a first active material layer (225), contacting adjacent patterned conductive layer (16, 16a, 16b, 16c, 18, 18a, 18b) or said common electricity collecting layer (19);
a second active material layer (227), contacting the other adjacent patterned conductive layer (16, 16a, 16b, 16c, 18, 18a, 18b) or the other common electricity collecting layer (19);
an isolation layer (226), sandwiched between said first active material layer (225) and said second active material layer (227); and
said electrolyte system, disposed in said first active material layer (225) and said second active material layer (227).

3. The horizontal composite electricity supply structure (10) of claim 1, further comprising a first conductive lead (24) and a second conductive lead (26) connected electrically to the same or different patterned conductive layers (16, 16a, 16b, 16c, 18, 18a, 18b).

4. The horizontal composite electricity supply structure (10) of claim 3, wherein said first conductive lead (24) and said second conductive lead (26) are formed integrally with said patterned conductive layers (16, 16a, 16b, 16c, 18, 18a, 18b) connected with them.

5. The horizontal composite electricity supply structure (10) of claim 3, wherein said horizontal composite electricity supply structure (10) is configured to be externally connected serially and/or parallelly to one or more other horizontal composite electricity supply structures (10) by using said first conductive lead (24) and said second conductive lead (26).

6. The horizontal composite electricity supply structure (10) of claim 1, wherein said electrolyte system is selected form the group consisting of gel state, liquid state, pseudo solid state, solid state, or combinations thereof.

7. The horizontal composite electricity supply structure (10) of claim 1, wherein said plurality of electrochemical system elements (22) uses said first active material layer (225) and said second active material layer (227) with different polarities to contact said common electricity collecting layer (19) for forming series connection.

8. The horizontal composite electricity supply structure (10) of claim 1, wherein materials of said patterned conductive layers (16, 16a, 16b, 16c, 18, 18a, 18b) and/or said common electricity collecting layer (19) include stainless steel or graphite.

9. The horizontal composite electricity supply structure (10) of claim 1, wherein said fluid is a gas or a liquid.

10. The horizontal composite electricity supply structure (10) of claim 3, wherein when said first conductive lead (24), said second conductive lead (26), and said patterned conductive layers (16, 16a, 16b, 16c, 18, 18a, 18b) are different materials, they are connected by physical or chemical connection.

11. The horizontal composite electricity supply structure (10) of claim 10, wherein said first conductive lead (24) and said second conductive lead (26) connect to said patterned conductive layers (16, 16a, 16b, 16c, 18, 18a, 18b) by soldering, melting, conductive glue, or conductive cloth.

12. The horizontal composite electricity supply structure (10) of claim 1, wherein said patterned conductive layers (16, 16a, 16b, 16c, 18, 18a, 18b) and/or said common electricity collecting layer (19) are manufactured by spraying or calendering metal powders selected from the group consisting of aluminum, copper, titanium, nickel, stainless steel, and the alloys thereof mixed with one or more adhesive.

13. The horizontal composite electricity supply structure (10) of claim 2, wherein said plurality of electrochemical system elements (22) in any of said plurality of electrochemical system element groups (20) is electrically connected parallelly and/or serially.

## Patentansprüche

1. - Horizontale Verbundstromversorgungsstruktur (10), umfassend:
eine erste Isolierschicht (12);
eine zweite Isolierschicht (14), die gegenüber der ersten Isolierschicht (12) angeordnet ist; und
zwei strukturierte leitende Schichten (16, 16a, 16b, 16c, 18, 18a, 18b), die auf entsprechenden Oberflächen der ersten Isolierschicht (12) und der zweiten Isolierschicht (14) angeordnet sind;
**dadurch gekennzeichnet, dass** sie ferner Folgendes umfasst:
eine Vielzahl von elektrochemischen Systemelementgruppen (20), eingefügt zwischen die erste Isolierschicht (12) und die zweite Isolierschicht (14), die intern Reihen- und/oder Parallelschaltungen bilden, indem sie mit den strukturierten leitenden Schichten (16, 16a, 16b, 16c, 18, 18a, 18b) verbunden sind, wobei jede der Vielzahl von elektrochemischen Systemelementgruppen (20) durch eine Vielzahl von elektrochemischen Systemelementen (22) gebildet ist, wobei die Vielzahl von elektrochemischen Systemelementen (22) vertikal gestapelt ist und angrenzende elektrochemische Systemelemente (22) eine gemeinsame Stromsammelschicht (19) teilen;
wobei jedes der Vielzahl von elektrochemischen Systemelementen (22) eine Verpackungsschicht (23) an einem Umfang jedes der genannten Vielzahl von elektrochemischen Systemelementen (22) beinhaltet, um ein Elektrolytsystem davon zu trennen, und das Elektrolytsystem jedes der Vielzahl von elektrochemischen Systemelementen (22) nicht dazwischen zirkuliert, wobei jede der Vielzahl von elektrochemischen Systemelementgruppen (20) keine elektrochemische Reaktion außer dem Ladungstransfer mit angrenzenden elektrochemischen Systemelementen (22) aufweist,
wobei eine Vielzahl von Positionierungselementen (32) auf den entsprechenden Oberflächen der ersten Isolierschicht (12) und/oder der zweiten Isolierschicht (14) gebildet ist, die der Vielzahl von elektrochemischen Systemelementgruppen (20) zugewandt sind, und die Vielzahl von Positionierungselementen (32) außerhalb der genannten strukturierten leitenden Schichten (16, 16a, 16b, 16c, 18, 18a, 18b) freiliegt, um die Positionen der Vielzahl von elektrochemischen Systemelementgruppen (20) zu begrenzen;
wobei eine Vielzahl von Wärmeableitungskanälen zwischen angrenzenden elektrochemischen Systemelementgruppen (20) und außerhalb der Verpackungsschicht (23) angeordnet ist und ein Fluid in der Vielzahl von Wärmeableitungskanälen hinzugefügt wird, um einen Wärmeableitungseffekt zu verstärken;
und wobei die Vielzahl von elektrochemischen Systemelementen (22) auf beiden äußersten Seiten jeder der Vielzahl von elektrochemischen Systemelementgruppen (20) die strukturierten leitenden Schichten (16, 16a, 16b, 16c, 18, 18a, 18b) direkt als Stromsammelschichten verwendet.

2. - Horizontale Verbundstromversorgungsstruktur (10) nach Anspruch 1, wobei jedes der Vielzahl von elektrochemischen Systemelementen (22) Folgendes umfasst:
eine erste Aktivmaterialschicht (225), die die angrenzende strukturierte leitende Schicht (16, 16a, 16b, 16c, 18, 18a, 18b) oder die gemeinsame Stromsammelschicht (19) berührt;
eine zweite Aktivmaterialschicht (227), die die andere angrenzende strukturierte leitende Schicht (16, 16a, 16b, 16c, 18, 18a, 18b) oder die andere gemeinsame Stromsammelschicht (19) berührt;
eine Isolationsschicht (226), die zwischen die erste Aktivmaterialschicht (225) und die zweite Aktivmaterialschicht (227) eingefügt ist;
wobei das Elektrolytsystem in der ersten Aktivmaterialschicht (225) und der zweiten Aktivmaterialschicht (227) angeordnet ist.

3. - Horizontale Verbundstromversorgungsstruktur (10) nach Anspruch 1, ferner umfassend eine erste leitende Zuleitung (24) und eine zweite leitende Zuleitung (26), die elektrisch mit denselben oder unterschiedlichen strukturierten leitenden Schichten (16, 16a, 16b, 16c, 18, 18a, 18b) verbunden sind.

4. - Horizontale Verbundstromversorgungsstruktur (10) nach Anspruch 3, wobei die erste leitende Zuleitung (24) und die zweite leitende Zuleitung (26) integral mit den strukturierten leitenden Schichten (16, 16a, 16b, 16c, 18, 18a, 18b) gebildet sind, mit denen sie verbunden sind.

5. - Horizontale Verbundstromversorgungsstruktur (10) nach Anspruch 3, wobei die horizontale Verbundstromversorgungsstruktur (10) konfiguriert ist, um extern seriell und/oder parallel mit einer oder mehreren weiteren horizontalen Verbundstromversorgungsstrukturen (10) durch Verwendung der ersten leitenden Zuleitung (24) und der zweiten leitenden Zuleitung (26) verbunden zu werden.

6. - Horizontale Verbundstromversorgungsstruktur (10) nach Anspruch 1, wobei das genannte Elektrolytsystem ausgewählt ist aus der Gruppe, bestehend aus Gelzustand, Flüssigzustand, Pseudosolidezustand, Festzustand oder Kombinationen davon.

7. - Horizontale Verbundstromversorgungsstruktur (10) nach Anspruch 1, wobei die Vielzahl von elektrochemischen Systemelementen (22) die erste Aktivmaterialschicht (225) und die zweite Aktivmaterialschicht (227) mit unterschiedlichen Polaritäten verwendet, um die gemeinsame Stromsammelschicht (19) zu berühren, um eine Verbindung in Reihe zu bilden.

8. - Horizontale Verbundstromversorgungsstruktur (10) nach Anspruch 1, wobei Materialien der strukturierten leitenden Schichten (16, 16a, 16b, 16c, 18, 18a, 18b) und/oder der gemeinsamen Stromsammelschicht (19) Edelstahl oder Graphit beinhalten.

9. - Horizontale Verbundstromversorgungsstruktur (10) nach Anspruch 1, wobei das Fluid ein Gas oder eine Flüssigkeit ist.

10. - Horizontale Verbundstromversorgungsstruktur (10) nach Anspruch 3, wobei, wenn die erste leitende Zuleitung (24), die zweite leitende Zuleitung (26) und die strukturierten leitenden Schichten (16, 16a, 16b, 16c, 18, 18a, 18b) unterschiedliche Materialien sind, diese durch physikalische oder chemische Verbindung verbunden sind.

11. - Horizontale Verbundstromversorgungsstruktur (10) nach Anspruch 10, wobei die erste leitende Zuleitung (24) und die zweite leitende Zuleitung (26) mit den strukturierten leitenden Schichten (16, 16a, 16b, 16c, 18, 18a, 18b) durch Löten, Schmelzen, leitenden Kleber oder leitendes Gewebe verbunden sind.

12. - Horizontale Verbundstromversorgungsstruktur (10) nach Anspruch 1, wobei die strukturierten leitenden Schichten (16, 16a, 16b, 16c, 18, 18a, 18b) und/oder die gemeinsame Stromsammelschicht (19) durch Sprühen oder Kalandrieren von Metallpulvern hergestellt sind, die ausgewählt sind aus der Gruppe, bestehend aus Aluminium, Kupfer, Titan, Nickel, rostfreiem Stahl und deren Legierungen, gemischt mit einem oder mehreren Klebstoffen.

13. - Horizontale Verbundstromversorgungsstruktur (10) nach Anspruch 2, wobei die Vielzahl von elektrochemischen Systemelementen (22) in einer beliebigen der Vielzahl von elektrochemischen Systemelementgruppen (20) elektrisch parallel und/oder in Reihe verbunden ist.

## Revendications

1. - Structure d'alimentation électrique composite horizontale (10), comprenant :
une première couche d'isolation (12) ;
une seconde couche d'isolation (14), disposée à l'opposé de ladite première couche d'isolation (12) ; et
deux couches conductrices à motifs (16, 16a, 16b, 16c, 18, 18a, 18b), disposées sur des surfaces correspondantes de ladite première couche d'isolation (12) et de ladite seconde couche d'isolation (14) ;
**caractérisée par le fait qu'**elle comprend en outre :
une pluralité de groupes d'éléments de système électrochimique (20), pris en sandwich entre ladite première couche d'isolation (12) et ladite seconde couche d'isolation (14), formant des connexions en série et/ou en parallèle en interne en étant connectés auxdites couches conductrices à motifs (16, 16a, 16b, 16c, 18, 18a, 18b), chacun de ladite pluralité de groupes d'éléments de système électrochimique (20) étant formé par une pluralité d'éléments de système électrochimique (22), lesdits différents éléments de système électrochimique (22) étant empilés verticalement et des éléments de système électrochimique adjacents (22) partageant une couche de collecte d'électricité commune (19) ;
dans laquelle chacun de ladite pluralité d'éléments de système électrochimique (22) comprend une couche de couverture (23) sur une périphérie de chacun de ladite pluralité d'éléments de système électrochimique (22) afin de séparer un système électrolytique de ceux-ci, et le système électrolytique de chacun de ladite pluralité d'éléments de système électrochimique (22) ne circule pas entre eux, chacun de ladite pluralité de groupes d'éléments de système électrochimique (20) avec des éléments de système électrochimique adjacents (22) n'ayant pas de réaction électrochimique à l'exception d'un transfert de charge,
dans laquelle une pluralité d'éléments de positionnement (32) sont formés sur les surfaces correspondantes de ladite première couche d'isolation (12) et/ou de ladite seconde couche d'isolation (14) faisant face à ladite pluralité de groupes d'éléments de système électrochimique (20), et ladite pluralité d'éléments de positionnement (32) sont exposés à l'extérieur desdites couches conductrices à motifs (16, 16a, 16b, 16c, 18, 18a, 18b) afin de délimiter des emplacements de ladite pluralité de groupes d'éléments de système électrochimique (20) ;
dans laquelle une pluralité de canaux de dissipation thermique sont disposés entre des groupes d'éléments de système électrochimique adjacents (20) et à l'extérieur de la couche d'encapsulation (23), et un fluide est ajouté à l'intérieur de ladite pluralité de canaux de dissipation thermique afin d'augmenter un effet de dissipation thermique ; et
dans laquelle ladite pluralité d'éléments de système électrochimique (22) sur les deux côtés les plus extérieurs de chacun de ladite pluralité de groupes d'éléments de système électrochimique (20) utilisent lesdites couches conductrices à motifs (16, 16a, 16b, 16c, 18, 18a, 18b) directement comme couches de collecte d'électricité.

2. - Structure d'alimentation électrique composite horizontale (10) selon la revendication 1, dans laquelle chacun de ladite pluralité d'éléments de système électrochimique (22) comprend :
une première couche de matériau actif (225), en contact avec une couche conductrice à motifs adjacente (16, 16a, 16b, 16c, 18, 18a, 18b) ou avec ladite couche de collecte d'électricité commune (19) ;
une seconde couche de matériau actif (227), en contact avec l'autre couche conductrice à motifs adjacente (16, 16a, 16b, 16c, 18, 18a, 18b) ou l'autre couche de collecte d'électricité commune (19) ;
une couche d'isolation (226), prise en sandwich entre ladite première couche de matériau actif (225) et ladite seconde couche de matériau actif (227) ; et
ledit système électrolytique, disposé dans ladite première couche de matériau actif (225) et ladite seconde couche de matériau actif (227).

3. - Structure d'alimentation électrique composite horizontale (10) selon la revendication 1, comprenant en outre un premier fil conducteur (24) et un second fil conducteur (26) connectés électriquement à la même couche conductrice à motifs ou à des couches conductrices à motifs différentes (16, 16a, 16b, 16c, 18, 18a, 18b).

4. - Structure d'alimentation électrique composite horizontale (10) selon la revendication 3, dans laquelle ledit premier fil conducteur (24) et ledit second fil conducteur (26) sont formés d'un seul tenant avec lesdites couches conductrices à motifs (16, 16a, 16b, 16c, 18, 18a, 18b) auxquelles ils sont connectés.

5. - Structure d'alimentation électrique composite horizontale (10) selon la revendication 3, dans laquelle ladite structure d'alimentation électrique composite horizontale (10) est configurée pour être connectée de manière externe, en série et/ou en parallèle, à une ou plusieurs autres structures d'alimentation électrique composites horizontales (10) à l'aide dudit premier fil conducteur (24) et dudit second fil conducteur (26).

6. - Structure d'alimentation électrique composite horizontale (10) selon la revendication 1, dans laquelle ledit système électrolytique est choisi dans le groupe consistant en l'état gel, l'état liquide, l'état pseudo-solide, l'état solide ou les combinaisons de ceux-ci.

7. - Structure d'alimentation électrique composite horizontale (10) selon la revendication 1, dans laquelle ladite pluralité d'éléments de système électrochimique (22) utilisent ladite première couche de matériau actif (225) et ladite seconde couche de matériau actif (227) avec des polarités différentes pour entrer en contact avec ladite couche de collecte d'électricité commune (19) afin de former une connexion en série.

8. - Structure d'alimentation électrique composite horizontale (10) selon la revendication 1, dans laquelle des matériaux desdites couches conductrices à motifs (16, 16a, 16b, 16c, 18, 18a, 18b) et/ou de ladite couche de collecte d'électricité commune (19) comprennent de l'acier inoxydable ou du graphite.

9. - Structure d'alimentation électrique composite horizontale (10) selon la revendication 1, dans laquelle ledit fluide est un gaz ou un liquide.

10. - Structure d'alimentation électrique composite horizontale (10) selon la revendication 3, dans laquelle, lorsque ledit premier fil conducteur (24), ledit second fil conducteur (26) et lesdites couches conductrices à motifs (16, 16a, 16b, 16c, 18, 18a, 18b) sont des matériaux différents, ils sont connectés par une connexion physique ou chimique.

11. - Structure d'alimentation électrique composite horizontale (10) selon la revendication 10, dans laquelle ledit premier fil conducteur (24) et ledit second fil conducteur (26) sont connectés auxdites couches conductrices à motifs (16, 16a, 16b, 16c, 18, 18a, 18b) par soudure, fusion, colle conductrice ou tissu conducteur.

12. - Structure d'alimentation électrique composite horizontale (10) selon la revendication 1, dans laquelle lesdites couches conductrices à motifs (16, 16a, 16b, 16c, 18, 18a, 18b) et/ou ladite couche de collecte d'électricité commune (19) sont fabriquées par pulvérisation ou calandrage de poudres métalliques choisies dans le groupe consistant en aluminium, cuivre, titane, nickel, acier inoxydable et leurs alliages, mélangés avec un ou plusieurs adhésifs.

13. - Structure d'alimentation électrique composite horizontale (10) selon la revendication 2, dans laquelle ladite pluralité d'éléments de système électrochimique (22) dans l'un quelconque de ladite pluralité de groupes d'éléments de système électrochimique (20) sont connectés électriquement en parallèle et/ou en série.
